Europäisches Patentamt

European Patent Office

Office européen des brevets

(19)

(11) Publication number: **0 047 061**

**A1**

(12) # EUROPEAN PATENT APPLICATION

(21) Application number: **81303450.1**

(22) Date of filing: **27.07.81**

(51) Int. Cl.³: **F 16 B 39/34**

(30) Priority: **03.09.80 GB 8028437**

(43) Date of publication of application:
**10.03.82 Bulletin 82/10**

(84) Designated Contracting States:
**AT BE CH DE FR IT LI NL SE**

(71) Applicant: **FOREST FASTENERS LIMITED**
**Treforest Industrial Estate Near Pontypridd**
**Mid-Glamorgan CF37 5YG Wales(GB)**

(72) Inventor: **Strange, John**
**63 Thornhill Road**
**Llanishen Cardiff Wales(GB)**

(74) Representative: **Tregear, George Herbert**
**Benjamin et al,**
**LLOYD WISE, TREGEAR & CO Norman House 105-109**
**Strand**
**London WC2R 0AE(GB)**

(54) **Self-locking nuts.**

(57) A self-locking nut of the prevailing torque type embodying a friction collar (20) assembled in a nut body subsequently deformed over the end of the collar to hold it captive against a base in the body wherein the collar is preformed to have a thickness at its bore (21) greater than that at its periphery (22) so that it seats in full contact with the base prior to captivation.

Fig.4

Croydon Printing Company Ltd.

Title: Self-Locking Nuts

This invention relates to self-locking nuts of the prevailing torque type, and more especially a nut in which the prevailing torque is achieved by a non-metallic collar held captive at the top of the nut, the collar being designed to create interference and friction with the bolt threads as they emerge from the nut. An example of such a nut is illustrated in British Patent Specification No. 438,253.

Non-metallic collars in the earlier nuts of the type above described were made of a fibrous material and produced by blanking from strip, with the result that both upper and lower faces were substantially parallel and at right-angles to the nut axis. Subsequently these fibre collars have been replaced by collars moulded from polymeric materials, such as Polyamide 66 (Nylon). They have however always been produced in their original shape, i.e., in the form of flat-faced washers.

The counterbore in the nut body into which the collar is inserted has a base which is not flat, but frusto-conical. The nut bodies may be produced from hexagonal bar on automatic lathes, or in more recent times by cold-forging from round wire. Whichever method is used, the frusto-conical base of the counterbore is desirable to aid manufacture.

A flat-faced collar, after normal closure of the nut to achieve captivation, will not seat in full contact with the base. If the collar is distorted to seat fully on the base it will no longer have a predictable interference with the mating bolt. The problems arising with flat-faced collars are more fully described below.

The invention provides a self-locking nut of the prevailing torque type embodying a friction collar assembled in a nut body subsequently deformed over the end of the collar to hold it captive against a base in the body wherein the collar is preformed to have a thickness at its bore greater than that at its periphery so that it seats in full contact with the base prior to captivation.

Preferably the collar is symmetrical about a central plane transverse to its axis.

The invention will be further described with reference to the accompanying drawings in which:

Figure 1 is an axial section of a nut body before assembly of a collar therewith;

Figures 2 and 3 are axial sections of completed nuts of conventional type, Figure 2 showing the designed conditions of the nut and Figure 3 a common distorted condition thereof, and

Figure 4 is an axial section of a nut according to the invention.

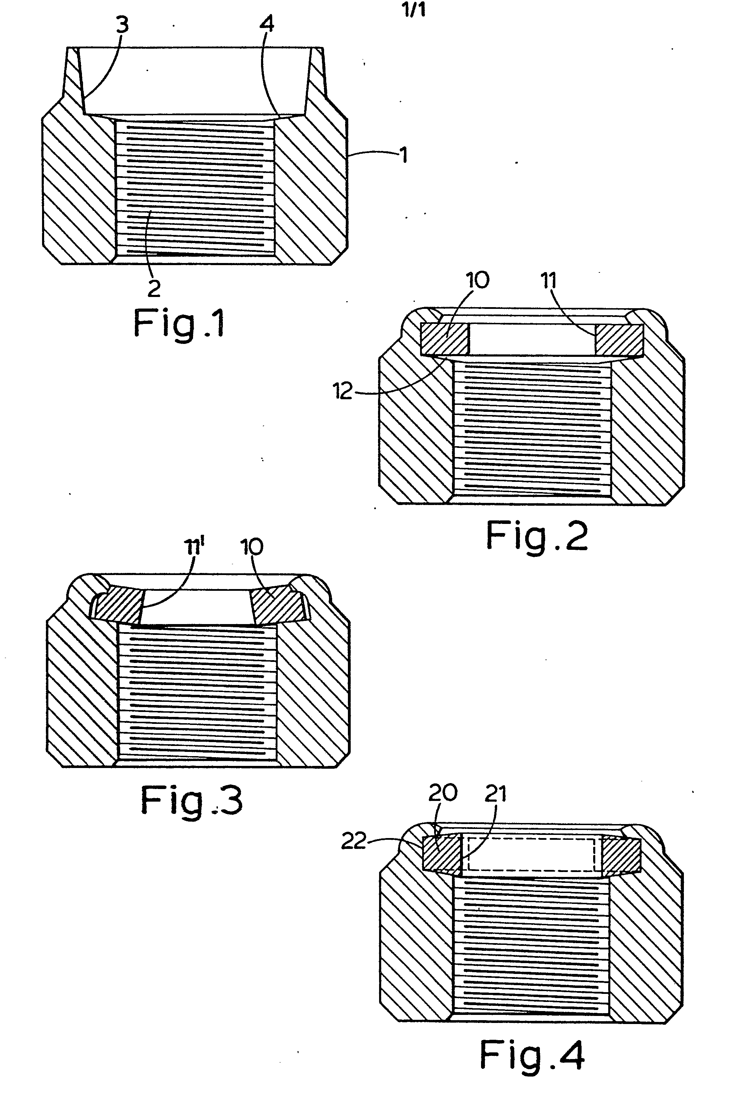

Referring to the drawings the nut body 1 has a normally threaded portion 2 and a counterbore 3 at its upper end with a frusto-conical base 4. The nut body may be made by any known method. Figure 2 illustrates a conventional flat-faced friction collar 10 in position in the Figure 1 nut body after normal closure of the nut to achieve captivation. It will be seen that the collar 10 is still substantially flat and at right-angles to the nut axis with its bore 11 parallel thereto. It will be noted that a substantial wedge shaped gap 12 exists below the collar, due to the frusto-conical base 4 of the nut counterbore 3.

It can be seen that displacement of a portion of the collar material due to the passage of the mating bolt will cause material to be forced into the frusto-conical gap 12 at the base 4 of the counterbore 11 in the nut, and it is necessary to compensate for the resulting loss of compression and friction by reducing the bore diameter.

Due to manufacturing tolerances and tool setting variation nuts frequently tend to be "over-closed", with the result that the collar 10 assumes the shape illustrated in Figure 3. Here the collar 10 has been deformed so that it is seating completely on the frusto-conical base 4 of the nut counterbore 3. Due to this distortion the bore 11 of the collar 10 is no longer parallel to the nut axis, but has also assumed a frusto-conical shape. The result of this distortion is that the bore 11 of the collar 10 no longer gives a predictable interference with the mating bolt, and the reduction in diameter towards the top of the collar encourages extrusion or bursting of the collar from its closure.

It will be readily understood that the amount of frictional torque exerted by the collar in the prevailing torque type of locknut is directly proportional to the surface area in contact with the bolt threads, providing that a consistent degree of compression of the resilient collar material can be obtained. This could be achieved by altering the nut body dimensions and thickening the collar, but such measures would automatically increase production cost.

Figure 4 shows a nut according to the invention. In this nut the conventional "flat washer" collar 10 is replaced by a collar 20 which is substantially thicker at its bore 21 than at its periphery 22. The collar 20 is symmetrical about a central plane transverse to the axis so that it can be assembled either way up. The taper on the collar is such that it seats in full contact on the base 4 of the counterbore 3 on the nut. The ratio of thickness at periphery to thickness at bore is in the range 1:1.5 to 1:2. Since there is no longer need to compensate for displaced material, the bore diameter of the collar can be increased with the result that increased frictional contact area with the bolt can be achieved with little or no increase in the amount of raw material used in the production of the collar. This increased area of frictional engagement is obtained without increasing the overall height of the completed nut. Improved performance, and consistency in performance, are obtained.

In Figure 4 the superimposed chain-dotted lines illustrate, for comparison purposes, a collar of the conventional design as illustrated in Figure 2. Figure 4 clearly illustrates the substantially greater area of frictional engagement between the collar and the mating bolt which has been provided, and that the wedge shaped gap 12 into which material from the collar of the old design could be forced, has been eliminated. It can also be seen that the collar 20 consumes approximately the same amount of raw material in manufacture as a conventional collar. The collar 20 can be made of nylon 66 by injection moulding in multi-cavity moulds: it is no more difficult to mould than a flat-faced collar.

Preferably the ratio of thickness of the collar at its periphery to the thickness at the bore is 1:1.8.

Claims:

1. A self-locking nut of the prevailing torque type embodying a friction collar assembled in a nut body subsequently deformed over the end of the collar to hold it captive against a base in the body wherein the collar is preformed to have a thickness at its bore greater than that at its periphery so that it seats in full contact with the base prior to captivation.

2. A self-locking nut as claimed in Claim 1, wherein the collar is symmetrical about a central plane transverse to its axis.

3. A self-locking nut as claimed in Claim 2, wherein the ratio of thickness at periphery to thickness at bore is in the range 1:1.5 to 1:2.

0047061

1/1

Fig.1

Fig.2

Fig.3

Fig.4

**European Patent Office**

## EUROPEAN SEARCH REPORT

Application number

EP 81 30 3450.1

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 018 467 (EATON MANUFACTURING) <br> * fig. 4 * | 1-3 | F 16 B 39./34 |
| | US - A - 1 604 298 (NEITZEL) <br> * fig. 1 * | 1-3 | |
| | US - A - 2 421 105 (WARREN JR.) <br> * fig. 2 * | 1-3 | |
| | | | **TECHNICAL FIELDS SEARCHED (Int. Cl.³)** |
| | US - A - 3 203 459 (COLDREN) <br> * fig. 1 * | 1-3 | F 16 B 39/34 |
| | US - A - 2 385 851 (SWANSTROM) <br> * fig. 2 * | 1 | |
| | US - A - 2 450 694 (SAUER) <br> * fig. 1 * | 1 | |

**CATEGORY OF CITED DOCUMENTS**

X: particularly relevant
A: technological background ·
O: non-written disclosure .
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 02-12-1981 | Examiner <br> ZAPP | |

EPO Form 1503.1  06.78